# EUROPEAN PATENT SPECIFICATION

(11) **EP 2 828 505 B1**
(45) Date of publication and mention of the grant of the patent: **24.02.2021**
(21) Application number: 13817296.0
(22) Date of filing: 21.03.2013
(51) Int. Cl.: F02C 7/06, F01D 25/18

(54) **PLANETARY GEAR SYSTEM ARRANGEMENT WITH AUXILIARY OIL SYSTEM**
PLANETENGETRIEBESYSTEMANORDNUNG MIT HILFSÖLSYSTEM
AGENCEMENT DE SYSTÈME D'ENGRENAGE PLANÉTAIRE AYANT UN SYSTÈME D'HUILE AUXILIAIRE

(30) Priority: 23.03.2012 US 201213428491
(43) Date of publication of application: 28.01.2015
(73) Proprietor: United Technologies Corporation, Farmington, CT 06032 (US)
(72) Inventor: MCCUNE, Michael E., Colchester, CT 06415 (US); SHERIDAN, William G., Southington, CT 06489 (US); PORTLOCK, Lawrence E., Bethany, CT 06524 (US)
(74) Representative: Dehns
(86) International application number: PCT/US2013/033207
(87) International publication number: WO 2014/011245

(56) References cited:
- EP-A1- 2 264 336
- EP-A2- 2 327 859
- US-A1- 2007 240 399
- US-A1- 2009 090 096
- US-A1- 2009 188 334
- US-A1- 2010 105 516
- US-A1- 2010 317 478

## Description

### FIELD

This invention relates to planetary gear trains and more particularly to a lubricating system for a planetary gear train.

### BACKGROUND

Planetary gear trains are complex mechanisms that reduce, or occasionally increase, the rotational speed between two rotating shafts or rotors. The compactness of planetary gear trains makes them appealing for use in aircraft engines where space is at a premium.

The forces and torque transferred through a planetary gear train place stresses on the gear train components that may make them susceptible to breakage and wear. In practice, conditions may be less than ideal and place additional stresses on the gear components. For example the longitudinal axes of a planetary gear train's sun gear, planet carrier, and ring gear are ideally coaxial with the longitudinal axis of an external shaft that rotates the sun gear. Such perfect coaxial alignment, however, is rare due to numerous factors including imbalances in rotating hardware, manufacturing imperfections, and transient flexure of shafts and support frames due to aircraft maneuvers. The resulting parallel and angular misalignments impose moments and forces on the gear teeth, the bearings which support the planet gears in their carrier, and the carrier itself. These imposed forces and moments may cause gear component wear and increase a likelihood that a component may break in service. Component breakage is undesirable in any application, but particularly so in an aircraft engine. Moreover, component wear necessitates inspections and part replacements which may render the engine and aircraft uneconomical to operate.

The risk of component breakage may be reduced by making the gear train components larger and therefore stronger. Increased size may also reduce wear by distributing the transmitted forces over correspondingly larger surfaces. However increased size offsets the compactness that makes planetary gear trains appealing for use in aircraft engines, and the corresponding weight increase is similarly undesirable. The use of high strength materials and wear resistant coatings can also be beneficial, but escalates the cost of the gear train and therefore does not diminish the desire to reduce wear.

Stresses due to misalignments can also be reduced by the use of flexible couplings to connect the gear train to external devices such as rotating shafts or non-rotating supports. For example, a flexible coupling connecting a sun gear to a drive shaft flexes so that the sun gear remains near its ideal orientation with respect to the mating planet gears even though the axis of the shaft is oblique or displaced with respect to a perfectly aligned orientation. Many prior art couplings, however, contain multiple parts that require lubrication and are themselves susceptible to wear. Prior art couplings may also lack adequate rigidity and strength, with respect to torsion about a longitudinal axis, to be useful in high torque applications.

US 2010/105516 discloses a gear train component according to the preamble of claim 1.

### SUMMARY

In accordance with the invention, there is provided a gas turbine engine as set forth in claim 1.

In another embodiment according to the previous embodiment, the lubricating system includes a lubricant input, there being a stationary first bearing receiving lubricant from the lubricant input. The first bearing has an inner first race in which lubricant flows, and a second bearing for rotation within the first bearing. The second bearing has a first opening in registration with the inner first race such that lubricant may flow from the inner first race through the first opening into a first conduit.

In another embodiment according to the previous embodiment, a rotating carrier supports a planetary gear wherein the second bearing extends from the rotating carrier about an axis.

In another embodiment according to the previous embodiment, the first conduit lubricates the planetary gears.

In another embodiment according to the previous embodiment, the ring gear has a recess.

In another embodiment according to the previous embodiment, the recess is radially outward of gear teeth on the ring gear.

In another embodiment according to the previous embodiment, the recess is formed by recess portions formed in each of two gear portions which together form the ring gear.

In another embodiment according to the previous embodiment, the fan rotates slower than the first compressor stage.

Also disclosed is a gas turbine engine having a fan, a first compressor rotor and a second compressor rotor. The first turbine rotor drives the second compressor rotor as a high spool. The second turbine rotor drives the first compressor rotor as part of a low spool. A gear reduction drives the fan with the low spool at a reduced speed, such that the fan and first compressor rotor rotate in the same direction. The high spool operates at higher pressures than the low spool. A lubrication system lubricates components across a rotation gap. The lubrication system includes a lubricant input, a stationary first bearing receiving lubricant from the lubricant input, and an inner first race in which lubricant flows, and a second bearing for rotation within the first bearing. The second bearing has a first opening in registration with the inner first race such that lubricant may flow from the inner first race through the first opening into a first conduit.

In another example according to the previous example, said first bearing and said second bearing are disposed about an axis.

In another example according to the previous example, the first conduit and the opening are perpendicular to the axis.

In another example according to the previous example, a rotating carrier supports a planetary gear wherein the second bearing extends from the rotating carrier about an axis.

In another example according to the previous example, the first conduit is parallel to the axis and the first opening is perpendicular to the axis.

In another example according to the previous example, the first conduit lubricates the planetary gears.

In another example according to the previous example, a first spray bar disposed on the carrier.

In another example according to the previous example, the first bearing has a second inner race. The second bearing has a second opening in registration with the second inner race and a second conduit for passing lubricant to the spray bar.

In another example according to the previous example, the fan rotates slower than the first compressor stage.

In a further featured example, a gas turbine engine has a fan, a first compressor stage and a second compressor stage. The first turbine stage drives the second compressor stage as a high spool. The second turbine stage drives the first compressor stage as part of a low spool. A gear train drives the fan with the low spool, such that the fan and first compressor stage rotate in the same direction. The high spool operates at higher pressures than the low spool. The gear train has a planetary gear, a sun gear, a stationary ring gear, and a carrier in which the planetary gear is mounted. The carrier is mounted for rotation about the said sun gear and drives the fan. A lubricating system is provided for the gear train. The ring gear has a recess radially outward of gear teeth on the ring gear.

In another example according to the previous example, the recess is formed by recess portions formed in each of two gear portions which together form the ring gear.

In another example according to the previous example, the fan rotates slower than the first compressor stage.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 is a schematic view, partially in section, of a gas turbine engine.
Figure 2 is a sectional view taken along the lines 2-2 in Figure 1.
Figure 2A is a sectional view through the gear drive.
Figure 3 is a sectional view taken along the lines 3-3.
Figure 3A is a sectional view taken along the line A-A of Figure 3.
Figure 3B is a sectional view taken along the line B-B of Figure 3.
Figure 3C is a sectional view taken along the line C-C Figure 3.
Figure 4 is a sectional view of a portion of oil flow path A.
Figure 5 is a sectional view of an upper portion of the planetary gear system of Figure 1.
Figure 6 is a sectional view of a lower portion of the planetary gear system of Figure 1.
Figure 7 is a sectional view of a flow of oil into gutters.

### DETAILED DESCRIPTION

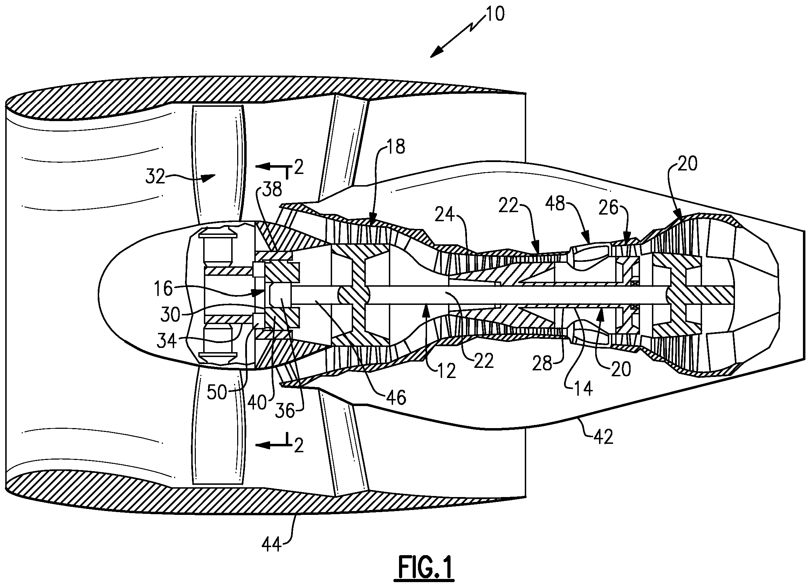

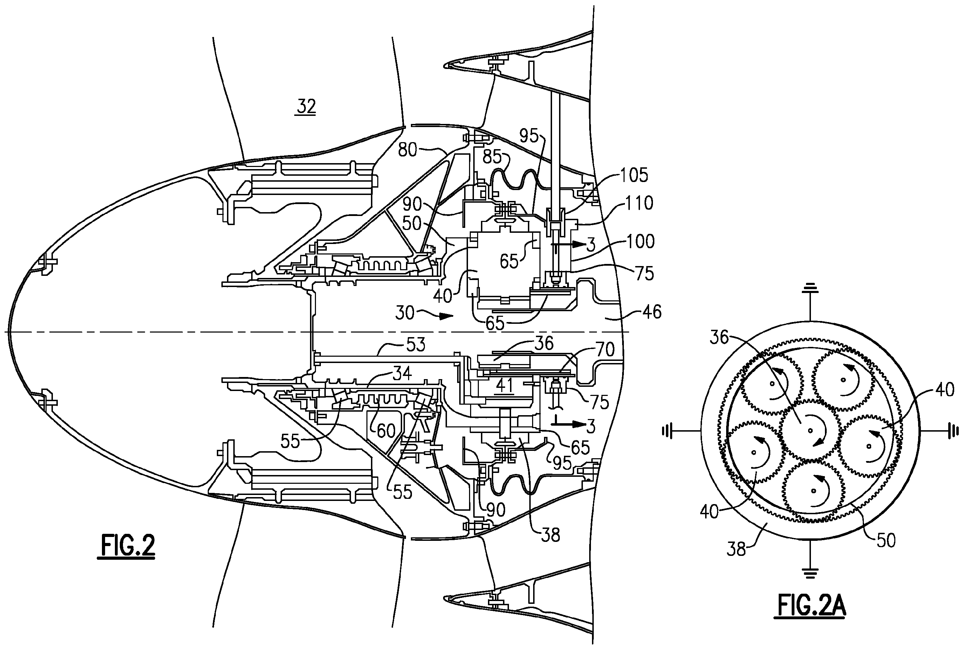

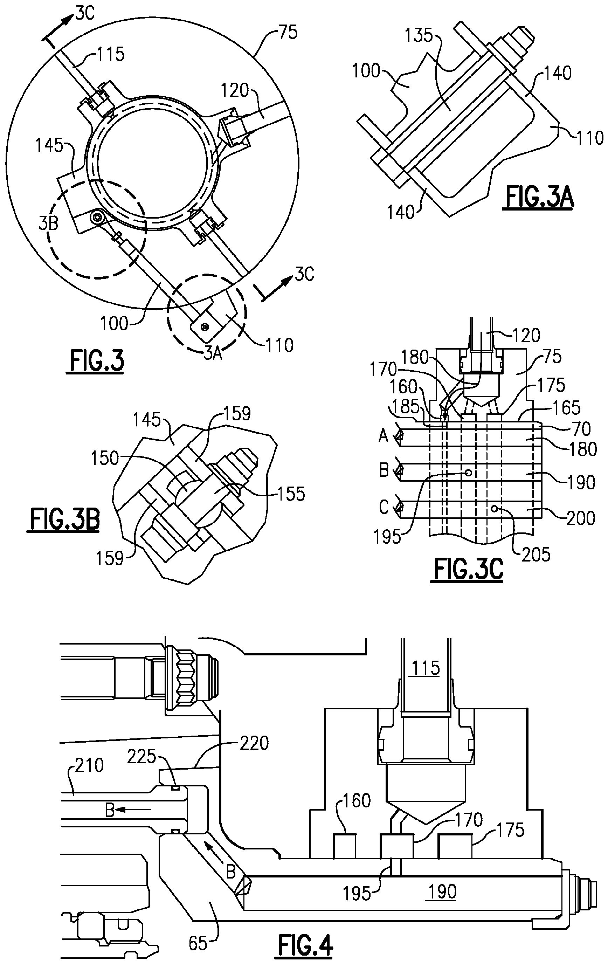

Figure 1 shows a schematic cross-section of gas turbine engine 10. Gas turbine engine 10 includes low pressure spool 12, high pressure spool 14 and fan drive gear system ("FDGS") 16. Low pressure spool 12 includes low pressure compressor 18 and low pressure turbine 20, which are connected by low pressure shaft 22. High pressure spool 14 includes high pressure compressor 24 and high pressure turbine 26, which are connected by high pressure shaft 28. Fan drive gear system 16 includes epicyclic gear train 30 that drives a fan assembly 32 by way of a carrier shaft 34. Epicyclic gear train 30 includes sun gear 36, ring gear 38 and planetary gears 40 as will be shown hereinbelow. A carrier 50 is shown schematically in Figure 4 between shaft 34 and ring gear 38. Details of this connection are better shown in Figure 2.

Low pressure spool 12 and high pressure spool 14 are covered by engine nacelle 42, and fan assembly 32 and nacelle 42 are covered by fan nacelle 44. Low pressure spool 12, high pressure spool 14 and fan assembly 32 comprise a two-and-a-half spool gas turbine engine in which epicyclic gear train 30 couples fan assembly 32 to low pressure spool 12 with input shaft 46.

Fan assembly 32 generates bypass air for producing thrust that is directed between engine nacelle 42 and fan nacelle 44, and core air that is directed into engine nacelle 42 for sequential compression with low pressure compressor 18 and high pressure compressor 24. Compressed core air is routed to combustor 48 wherein it is mixed with fuel to sustain a combustion process. High energy gases generated in combustor 48 are used to turn high pressure turbine 26 and low pressure turbine 20. High pressure turbine 26 and low pressure turbine 20 rotate high pressure shaft 28 and low pressure shaft 22 to drive high pressure compressor 24 and low pressure compressor 18, respectively. Low pressure shaft 22 also drives input shaft 46, which connects to epicyclic gear train 30 to drive fan assembly 32.

Referring now to Figure 2 and Figure 2A, a view of the planetary gear system having exemplary oil supply system is shown. The system is comprised of a input shaft 46, sun gear 36 attaching thereto a plurality of planetary gears 40 that rotate about the sun gear 36, stationary ring gear 38, and a carrier 50 that rotates about the star gear to drive the fan assembly 32. As the ring gear 38 is stationary, the rotation of the sun gear 36 causes each planetary gear 40 to counter-rotate relative to the direction of rotation of the sun gear 36 and simultaneously to orbit the sun gear 36 in the direction of the sun gear's rotation. In other words, whereas each planetary gear 40 individually counter-rotates relative to the sun gear 36, the group of planetary gears 40 co-rotates with the sun gear 36. Moreover, as the carrier 50 is driven by the rotation of the group of planetary gears 40, the carrier 50 also co-rotates with respect to the sun gear 36. Finally, as the fan 32 is driven by the carrier 50 (via shaft 34), the fan 32 also co-rotates with respect to the sun gear 36 and the low spool shaft 46. Thus, in this embodiment, the fan 32 rotates in the same direction as the low pressure compressor 18.

A first spray bar 41 is mounted to the carrier 50 in between each planetary gear 40 that lubricates the planet gears 40 and ring gear 38. A second spray bar 53 is attached to the first spray bar 41 and extends forward to provide lubrication to the carrier shaft 34 that is supported by tapered bearings 55 that are tensioned by spring 60.

The carrier 50 has a shaft 34 for driving the fan assembly 32, a circular body 65 for holding the planetary gears 40 and a cylinder 70 projecting aft about the input shaft 46. The cylinder 70 also closely interacts with a stationary oil transfer bearing 75.

A grounding structure 80 holds the FDGS 16, the ring gear 38, forward gutter 90 and aft gutter 95. The flexible coupling 85 is disposed around the rotary input shaft 46. The forward gutter 90 and an aft gutter 95 attach to and around the outer edge of the ring gear 38 to collect oil used by the system for reuse as will be discussed herein. Oil is input through the stationary oil transfer bearing 75 to the cylinder 70 (e.g. also a bearing) as will be discussed herein.

Referring now to Figure 3, a side, sectional view of the oil transfer bearing 75 is shown. The oil transfer bearing 75 is prevented from rotational movement by attachment of a link 100 via tab 110 to an oil input coupling 105 that attaches to the stationary aft gutter 95 (see also Figure 2).

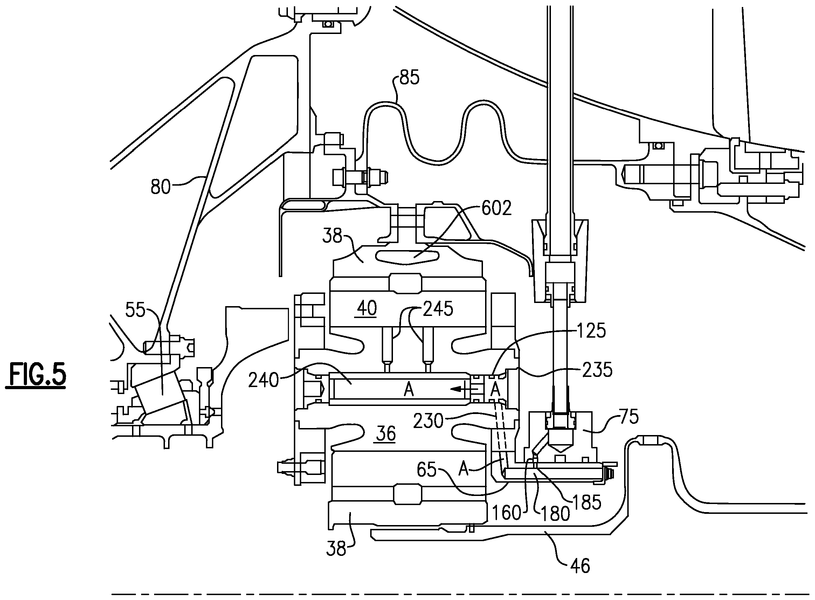

The oil transfer bearing 75 has a plurality of inputs to provide oil to those portions of the FDGS 16 that require lubrication during operation. For instance, oil from tube 115 is intended to lubricate the tapered bearings 55, oil from tube 120 is intended to lubricate the planet gear bearings 125 (see Figure 5), and oil from tube 130 is intended to lubricate the planet and ring gears, 38, 40. Though three inputs are shown herein, other numbers of oil inputs are contemplated herein.

Referring now to Figures 3A and 3B, the link 100 attaches via a pin 135 to the ears 140 extending from the tab 110. The link 100 extends towards a boss 145 on the oil transfer bearing 75 and is attached thereto by a ball 150 and a pin 155 extending through the ball and a pair of ears 159 on the boss 145 on the oil transfer bearing 75. The ball 150 allows the oil transfer bearing 75 to flex with the rotary input shaft 46 as torqueing moments are experienced by the fan assembly 32 and other portions of the engine 10. The link 100 prevents the oil transfer bearing 75 from rotating while allowing it to flex.

Referring now to Figure 3C, a cross-sectional view of the oil transfer bearing 75 is shown. The oil transfer bearing has a first race 160 that has a rectangular shape and extends around the interior surface 165 of the oil transfer bearing 75, a second race 170 that has a rectangular shape and extends around the interior surface 165 of the oil transfer bearing 75 and a third race 175 that has a rectangular shape and extends around the interior surface 165 of the oil transfer bearing 75. In the embodiment shown, tube 120 inputs oil via conduit 180 into the first race 160.

Cylinder 70 which extends from the carrier circular body 65, has a first oil conduit 180 extending axially therein and communicating with the first race 160 via opening 185, a second oil conduit 190 extending axially therein and communicating with the second race 170 via opening 195 and a third oil conduit 200 extending axially therein and communicating with the third race 175 via opening 205. As the cylinder 70 rotates within the oil transfer bearing 75, the openings 185, 195, 205 are constantly in alignment with races 160, 170, 175 respectively so that oil may flow across a rotating gap between the oil transfer bearing 75 and the cylinder 65 through the openings 185, 195, 205 to the conduits 180, 190, 200 to provide lubrication to the areas necessary in engine 10. As will be discussed herein, oil from conduit 180 flows through pathway A, oil from conduit 190 flows through pathway B and oil from conduit 200 flows through pathway C as will be shown herein.

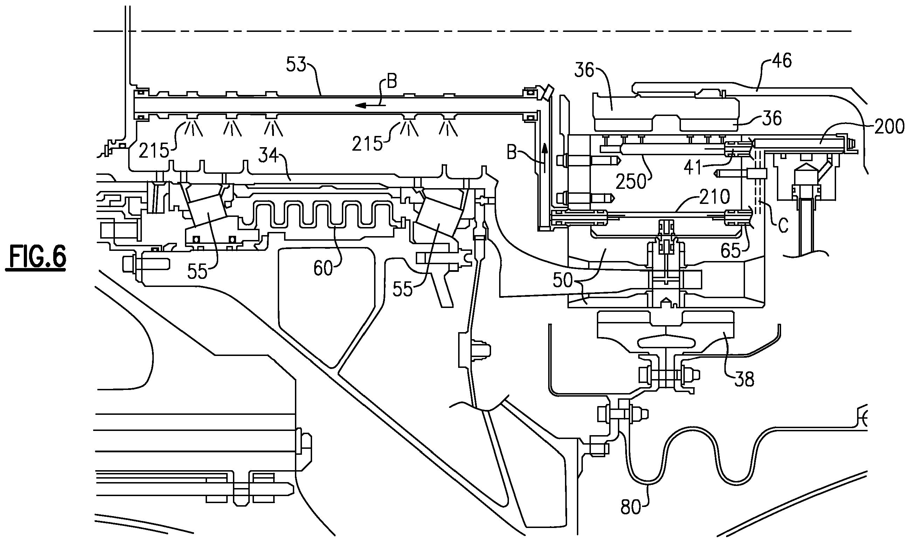

Referring now to Figures 4 and 6, oil from the tube 115 flows into second race 170, through opening 195 into conduit 190. From conduit 190, the oil flows through path B into a pipe 210 in the first spray bar 41 to the second spray bar 53 where it is dispersed through nozzles 215. Pipe 210 is mounted into fixtures 220 in the circular body 65 by o-rings 225 the oil Figure 4, the journal oil bearing input passes through tube, and tube into transfers tubes through tube into the interior of each planetary gear. Each planetary gear has a pair of transverse tubes communicating with the interior of the planetary journal bearing to distribute oil between the planetary gear and the ring gear and a set of gears to provide lubricating area oil to the journal bearings 235 themselves.

Referring now to Figures 3C and 5, the flow of oil through path A is shown. The oil leaves conduit 180 through tube 230 and flows around journal bearings 235 that support the planet gear 40 and into the interior of shaft 240. Oil then escapes from the shaft 240 through openings 245 to lubricate between the planetary gears 40 and the ring gear 38.

Referring to Figure 6, the conduit 200 provides oil through pathway C into manifold 250 in the first spray bar 41 which sprays oil through nozzles 255 on the sun gear.

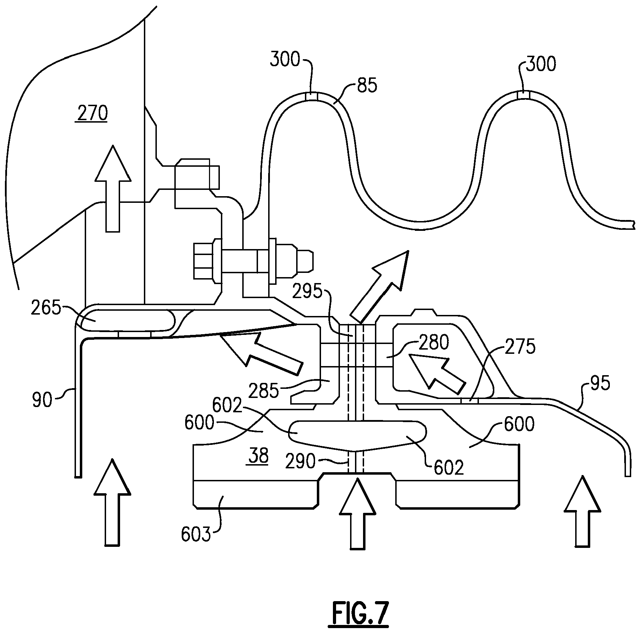

Referring now to Figure 7, oil drips (see arrows) from the planetary gears 40 and the sun gear 36 about the carrier 50 and is trapped by the forward gutter 90 and the aft gutter 95. Oil captured by the forward gutter 90 is collected through scupper 265 for transport into an auxiliary oil tank 270. Similarly, oil captured by the aft gutter 95 travels through opening 275 and opening 280 in the ring gear support 285 into the forward gutter 90 to be similarly collected by the scupper 265 to go to the auxiliary oil tank 270. Some oil passes through openings 290, 295 within the ring gear 38 and drips upon the flexible coupling 85 and migrates through holes 300 therein and drains to the main scavenge area (not shown) for the engine 10.

As is clear from Figures 5 and 7, there is a recess adjacent the outer periphery of the ring gear 38. The recess identified by 602, can be seen to be formed by half-recess portions in each of two separate gear portions 600 which form the ring gear 38. As is clear, the recess 602 is radially outwardly of the gear teeth 603 on the ring gear 38. This recess helps balance force transmitted through the ring gear as the various interacting gear members shift orientation relative to each other.

Referring now to the Figures, In view of these shortcomings a simple, reliable, unlubricated coupling system for connecting components of an epicyclic gear train 30 to external devices while accommodating misalignment therebetween is sought.

## Claims

1. A gas turbine engine (10) comprising:
a fan (32), a first compressor stage (18) and a second compressor stage (24);
a first turbine stage (26) and a second turbine stage (20), said first turbine stage (26) driving said second compressor stage (24) as a high spool, said second turbine stage (20) driving said first compressor stage (18) as part of a low spool, and said high spool operating at higher pressures than said low spool;
a gear train (30) driving said fan (32) with said low spool, and such that said fan (32) and said first compressor stage (18) rotate in the same direction, said gear train (30) having planetary gears (40), a sun gear (36), a stationary ring gear (38), a carrier (50) in which said planetary gears (40) are mounted, said carrier (50) mounted for rotation about said sun gear (36) and driving said fan (32) via a carrier shaft (34) that is supported by tapered bearings (55) that are tensioned by a spring (60); and
a lubricating system, wherein the lubricating system includes a first spray bar (41) mounted to the carrier (50) in between each planetary gear (40) and providing lubrication to the planetary gears (40) and the ring gear (38); and **characterized by**
a second spray bar (53) attached to said first spray bar (41) and extending forward to provide lubrication to the carrier shaft (34).

2. The gas turbine engine of claim 1, wherein the lubricating system includes a lubricant input (120), there being a stationary first bearing (75) receiving lubricant from said lubricant input (120), said first bearing (75) having an inner first race (160) in which lubricant flows, and a second bearing (70) for rotation within said first bearing (75), said second bearing having a first opening (185) in registration with said inner first race (160) such that lubricant may flow from said inner first race (160) through said first opening (185) into a first conduit (180).

3. The gas turbine engine of claim 1 or 2, wherein said ring gear (38) has a recess (602).

4. The gas turbine engine of claim 3, wherein said recess (602) is radially outward of gear teeth (603) on said ring gear (38).

5. The gas turbine engine of claim 4, wherein said recess (602) is formed by recess portions formed in each of two gear portions (600) which together form said ring gear (38).

6. The gas turbine engine of claim 2, wherein said second bearing (70) extends from said carrier (50) about an axis.

7. The gas turbine engine of claim 6, wherein said first conduit (180) is parallel to said axis and said first opening (185) is perpendicular to said axis.

8. The gas turbine engine of any of claims 2, 6 or 7, wherein said first conduit (180) lubricates said planetary gears (40).

9. The gas turbine engine of any preceding claim, wherein said first bearing has a second inner race and said second bearing has a second opening in registration with said second inner race and a second conduit for passing lubricant to said first spray bar (41).

10. The gas turbine engine of any preceding claim, wherein said fan (32) rotates slower than the first compressor stage (18).

## Patentansprüche

1. Gasturbinentriebwerk (10), umfassend:
einen Lüfter (32), eine erste Verdichterstufe (18) und eine zweite Verdichterstufe (24);
eine erste Turbinenstufe (26) und eine zweite Turbinenstufe (20), wobei die erste Turbinenstufe (26) die zweite Verdichterstufe (24) als eine Hochspule antreibt, die zweite Turbinenstufe (20) die erste Verdichterstufe (18) als Teil einer Niederspule antriebt und die Hochspule bei höheren Drücken als die Niederspule betrieben wird;
ein Rädergetriebe (30), das den Lüfter (32) mit der Niederspule antriebt, und sodass der Lüfter (32) und die erste Verdichterstufe (18) in dieselbe Richtung rotieren, wobei das Rädergetriebe (30) Planetenräder (40), einen Sonnenrad (36), ein stationäres Hohlrad (38), einen Träger (50), in dem die Planetenräder (40) montiert sind, aufweist, wobei der Träger (50) zur Rotation um das Sonnenrad (36) und zum Antreiben des Lüfters (32) über eine Trägerwelle (34) montiert ist, die durch Kegellager (55) gestützt wird, die durch eine Feder (60) gespannt sind; und
ein Schmiersystem, wobei das Schmiersystem eine erste Sprühstange (41) beinhaltet, die an dem Träger (50) zwischen jedem Planetenrad (40) montiert ist und Schmierung für die Planetenräder (40) und das Hohlrad (38) bereitstellt; und **gekennzeichnet durch**
eine zweite Sprühstange (53), die an der ersten Sprühstange (41) befestigt ist und sich nach vorn erstreckt, um Schmierung für die Trägerwelle (34) bereitzustellen.

2. Gasturbinentriebwerk nach Anspruch 1, wobei das Schmiersystem eine Schmiermittelspeisung (120) beinhaltet, ein stationäres erstes Lager (75), das Schmiermittel aus der Schmiermittelspeisung (120) aufnimmt, wobei das erste Lager (75) einen inneren ersten Laufring (160) aufweist, in welchem Schmiermittel fließt, und ein zweites Lager (70) zur Rotation innerhalb des ersten Lagers (75) vorhanden ist, wobei das zweite Lager eine erste Öffnung (185) in Überdeckung mit dem inneren ersten Laufring (160) aufweist, sodass Schmiermittel von dem inneren ersten Laufring (160) durch die erste Öffnung (185) in eine erste Leitung (180) fließen kann.

3. Gasturbinentriebwerk nach Anspruch 1 oder 2, wobei das Hohlrad (38) eine Vertiefung (602) aufweist.

4. Gasturbinentriebwerk nach Anspruch 3, wobei sich die Vertiefung (602) radial außerhalb von Radzähnen (603) an dem Hohlrad (38) befindet.

5. Gasturbinentriebwerk nach Anspruch 4, wobei die Vertiefung (602) durch Vertiefungsabschnitte gebildet ist, die in jedem von zwei Radabschnitten (600) gebildet sind, die zusammen das Hohlrad (38) bilden.

6. Gasturbinentriebwerk nach Anspruch 2, wobei sich das zweite Lager (70) von dem Träger (50) um eine Achse erstreckt.

7. Gasturbinentriebwerk nach Anspruch 6, wobei die erste Leitung (180) parallel zu der Achse ist und die erste Öffnung (185) senkrecht zu der Achse ist.

8. Gasturbinentriebwerk nach einem der Ansprüche 2, 6 oder 7, wobei die erste Leitung (180) die Planetenräder (40) schmiert.

9. Gasturbinentriebwerk nach einem der vorstehenden Ansprüche, wobei das erste Lager einen zweiten inneren Laufring aufweist und das zweite Lager eine zweite Öffnung in Überdeckung mit dem zweiten inneren Laufring und eine zweite Leitung zum Leiten von Schmiermittel zu der ersten Sprühstange (41) aufweist.

10. Gasturbinentriebwerk nach einem der vorstehenden Ansprüche, wobei der Lüfter (32) langsamer als die erste Verdichterstufe (18) rotiert.

## Revendications

1. Moteur à turbine à gaz (10) comprenant :
une soufflante (32), un premier étage de compresseur (18) et un second étage de compresseur (24) ;
un premier étage de turbine (26) et un second étage de turbine (20), ledit premier étage de turbine (26) entraînant ledit second étage de compresseur (24) en tant que bobine haute, ledit second étage de turbine (20) entraînant ledit premier étage de compresseur (18) en tant que partie d'une bobine basse, et ladite bobine haute fonctionnant à des pressions plus élevées que ladite bobine basse ;
un train d'engrenage (30) entraînant ladite soufflante (32) avec ladite bobine basse, et de sorte que ladite soufflante (32) et ledit premier étage de compresseur (18) tournent dans le même sens, ledit train d'engrenage (30) ayant des engrenages planétaires (40), une roue solaire (36), une couronne stationnaire (38), un support (50) dans lequel lesdits engrenages planétaires (40) sont montés, ledit support (50) étant monté pour tourner autour de ladite roue solaire (36) et entraînant ladite soufflante (32) via un arbre de support (34) qui est soutenu par des roulements coniques (55) qui sont mis sous tension par un ressort (60) ; et
un système de lubrification,
dans lequel le système de lubrification comporte une première rampe d'injection (41) montée sur le support (50) entre chaque engrenage planétaire (40) et assurant la lubrification des engrenages planétaires (40) et de la couronne (38) ; et **caractérisé par**
une seconde rampe d'injection (53) fixée à ladite première rampe d'injection (41) et s'étendant en avant pour assurer la lubrification de l'arbre de support (34).

2. Moteur à turbine à gaz selon la revendication 1, dans lequel le système de lubrification comporte une entrée de lubrification (120), à cet endroit se trouvant un premier roulement stationnaire (75) recevant du lubrifiant provenant de ladite entrée de lubrification (120), ledit premier roulement (75) ayant un premier chemin interne (160) dans lequel du lubrifiant s'écoule, et un second roulement (70) devant tourner à l'intérieur dudit premier roulement (75), ledit second roulement ayant une première ouverture (185) en correspondance avec ledit premier chemin interne (160) de sorte que du lubrifiant peut s'écouler depuis ledit premier chemin interne (160) à travers ladite première ouverture (185) jusque dans un premier conduit (180) .

3. Moteur à turbine à gaz selon la revendication 1 ou 2, dans lequel ladite couronne (38) a un évidement (602).

4. Moteur à turbine à gaz selon la revendication 3, dans lequel ledit évidement (602) est radialement vers l'extérieur de dents d'engrenage (603) sur ladite couronne (38).

5. Moteur à turbine à gaz selon la revendication 4, dans lequel ledit évidement (602) est formé par des parties d'évidemment formées dans chacune de deux parties d'engrenage (600) qui forment ensemble ladite couronne (38).

6. Moteur à turbine à gaz selon la revendication 2, dans lequel ledit second roulement (70) s'étend depuis ledit support (50) autour d'un axe.

7. Moteur à turbine à gaz selon la revendication 6, dans lequel ledit premier conduit (180) est parallèle audit axe et ladite première ouverture (185) est perpendiculaire audit axe.

8. Moteur à turbine à gaz selon l'une quelconque des revendications 2, 6 ou 7, dans lequel ledit premier conduit (180) lubrifie lesdits engrenages planétaires (40).

9. Moteur à turbine à gaz selon une quelconque revendication précédente, dans lequel ledit premier roulement a un second chemin interne et ledit second roulement a une seconde ouverture en correspondance avec ledit second chemin interne et un second conduit pour faire passer du lubrifiant jusqu'à ladite première rampe d'injection (41).

10. Moteur à turbine à gaz selon une quelconque revendication précédente, dans lequel ladite soufflante (32) tourne plus lentement que le premier étage de compresseur (18).
